# EUROPÄISCHE PATENTANMELDUNG

(11) **EP 1 081 931 A2**
(43) Veröffentlichungstag der Anmeldung: **07.03.2001**
(21) Anmeldenummer: 00117384.8
(22) Anmeldetag: 23.08.2000
(51) Int. Cl.: H04M 3/533, H04Q 3/72

(54) **Telekommunikationssystem mit ISDN-Kommunikationsnetz**

(30) Priorität: 31.08.1999 DE 19941344
(71) Anmelder: SIEMENS AKTIENGESELLSCHAFT, 80333 München (DE)
(72) Erfinder: Neuhaus, Ralf, 44534 Lünen (DE)

(57) **Zusammenfassung**

Beschrieben wird ein Kommunikationssystem (26) mit einem ISDN-Kommunikationsnetz (24), an dem mindestens zwei Teilnehmer (A, B) und mindestens ein zentrales Aufzeichnungsgerät (20) angeschlossen sind. Das Aufzeichnungsgerät (20) ermöglicht einem ersten Teilnehmer (A) eine Nachricht für einen zweiten Teilnehmer (B) zu speichern. Es teilt dem zweiten Teilnehmer (B) das Vorliegen einer neuen Nachricht durch Übermitteln einer Teilnehmeradresse zur Teilnehmerstation (16) des zweiten Teilnehmers (B) mit.

## Beschreibung

Die Erfindung betrifft ein Telekommunikationssystem mit einem ISDN-Kommunikationsnetz. In ISDN-Kommunikationsnetzen (Integrated Services Digital Network) und in analogen Kommunikationsnetzen ist es üblich, zentrale Aufzeichnungsgeräte zu nutzen. Diese Aufzeichnungsgeräte sind z.B. das "T-Net-Box"-System, das in den Vermittlungsstellen der Deutschen Telekom integriert ist, oder das "voice mail"-System in Hicom-Telefonanlagen der Firma Siemens AG.

Ein solches zentrales Aufzeichnungsgerät in einem ISDN-Kommunikationsnetz stellt eine Verbindung zu einem rufenden ersten Teilnehmer her, nachdem es von einem gerufenen zweiten Teilnehmer so konfiguriert worden ist, daß das zentrale Aufzeichnungsgerät die Anrufe für den gerufenen zweiten Teilnehmer entgegennimmt. Je nach Voreinstellung stellt das zentrale Aufzeichnungsgerät eine Verbindung zum rufenden ersten Teilnehmer sofort, nach einer bestimmten Zeit und/oder bei Störung der Teilnehmerstation des gerufenen zweiten Teilnehmers her. Der rufende erste Teilnehmer kann eine Nachricht zum Abruf durch den gerufenen zweiten Teilnehmer im zentralen Aufzeichnungsgerät speichern. Das zentrale Aufzeichnungsgerät teilt dem zweiten Teilnehmer durch einen Anruf mit, daß eine Nachricht für ihn gespeichert ist. Der gerufene zweite Teilnehmer muß zum Zeitpunkt, in dem das zentrale Aufzeichnungsgerät ihn über die gespeicherte Nachricht informiert, an der voreingestellten Teilnehmerstation erreichbar sein, um die Information entgegenzunehmen. Falls der gerufene zweite Teilnehmer nicht erreichbar ist, erhält er keine Information über die gespeicherte Nachricht.

Es gibt Lösungsansätze, die eine "Inband"-Signalisierung mithilfe eines der beiden Nutzkanäle, die auch als B-Kanäle bezeichnet werden, im ISDN-Kommunikationsnetz vorsehen. Bei der "Inband"-Signalisierung erfolgt eine Verbindung zwischen dem zentralen Aufzeichnungsgerät und der Teilnehmerstation des zweiten Teilnehmers auch in dessen Abwesenheit. Mithilfe dieser Verbindung werden Daten zur Teilnehmerstation des zweiten Teilnehmers übertragen. Diese Daten werden genutzt, um dem zweiten Teilnehmer mitzuteilen, daß eine Nachricht im zentralen Aufzeichnungsgerät für ihn gespeichert worden ist. Eine Verbindung über einen Nutzkanal ist kostenpflichtig. Um eine solche Lösung zu realisieren, ist ein erheblicher technischer Aufwand notwendig. Ein Dienstmerkmal des ISDN-Kommunikationsnetzes, das dazu dient, dem Teilnehmer mithilfe der Teilnehmerstation mitzuteilen, daß für ihn im zentralen Aufzeichnungsgerät Nachrichten gespeichert sind, ist derzeit nicht bekannt.

Aufgabe der Erfindung ist es, ein Kommunikationssystem anzugeben, bei dem der gerufene zweite Teilnehmer über eine gespeicherte Nachricht im zentralen Aufzeichnungsgerät zuverlässig informiert wird.

Die Aufgabe wird durch die Merkmale des Anspruchs 1 gelöst. Vorteilhafte Ausgestaltungen der Erfindung werden in den abhängigen Ansprüchen angegeben.

Die Erfindung löst diese Aufgabe durch ein Telekommunikationssystem mit einem ISDN-Kommunikationsnetz, indem die Teilnehmeradresse des zentralen Aufzeichnungsgerätes, nachdem eine Nachricht von einem ersten Teilnehmer aufgezeichnet worden ist, an die Teilnehmerstation eines zweiten Teilnehmers übertragen, in der Teilnehmerstation gespeichert und dem zweiten Teilnehmer mitgeteilt wird. Durch dieses Kommunikationssystem wird erreicht, daß dem zweiten Teilnehmer an der Teilnehmerstation das Vorliegen einer für ihn im zentralen Aufzeichnungsgerät gespeicherten Nachricht zuverlässig mitgeteilt wird. Der zweite Teilnehmer muß zum Zeitpunkt der Benachrichtigung durch das zentrale Aufzeichnungsgerät nicht unbedingt an der Teilnehmerstation erreichbar sein.

Eine bevorzugte Ausführungsform der Erfindung sieht vor, daß dem zweiten Teilnehmer die Teilnehmeradresse des zentralen Aufzeichnungsgerätes auf einer Anzeigeeinheit der Teilnehmerstation angezeigt wird. Dadurch wird erreicht, daß der zweite Teilnehmer anhand der angezeigten Teilnehmeradresse des zentralen Aufzeichnungsgerätes erkennt, daß es eine Verbindung zu der Teilnehmerstation des zweiten Teilnehmers aufgebaut hatte und somit eine Nachricht im zentralen Aufzeichnungsgerät zum Abruf durch den zweiten Teilnehmer gespeichert ist. Die angezeigte Teilnehmeradresse kann für den Verbindungsaufbau zum zentralen Aufzeichnungsgerät genutzt werden, um die aufgezeichneten Nachrichten abzurufen.

Eine weitere Ausführungsform der Erfindung ist dadurch gekennzeichnet, daß der Teilnehmeradresse des zentralen Aufzeichnungsgerätes in der Teilnehmerstation des zweiten Teilnehmers ein Text zugeordnet ist. Beim Empfang der Teilnehmeradresse wird der Text auf der Anzeigeeinheit der Teilnehmerstation angezeigt. Dadurch wird erreicht, daß dem zweiten Teilnehmer das Vorliegen einer gespeicherten Nachricht in dem zentralen Aufzeichnungsgerät nicht allein über die Teilnehmeradresse, sondern auch durch die Anzeige eines sinngebundenen Textes, z.B. "Neue Nachricht", mitgeteilt wird.

Eine andere Weiterbildung der Erfindung sieht vor, daß in der Teilnehmerstation des zweiten Teilnehmers eine Zähleinrichtung angeordnet ist. Diese Zähleinrichtung zählt die eingegangenen Anrufe des zentralen Aufzeichnungsgerätes und zeigt den Zählwert der Zähleinrichtung an einer Anzeigeeinheit der Teilnehmerstation an. Mit dieser Ausführungsform der Erfindung wird erreicht, daß dem zweiten Teilnehmer die Anzahl der für ihn in dem zentralen Aufzeichnungsgerät gespeicherten Nachrichten mitgeteilt wird.

Eine weitere bevorzugte Ausführungsvariante der Erfindung besteht darin, daß die Teilnehmeradresse des zentralen Aufzeichnungsgerätes über den Datenkanal des EURO-ISDN-Kommunikationsnetzes, der auch als D-Kanal bezeichnet wird, unter Anwendung des ISDN-Dienstmerkmals "CLIP" übertragen wird. "CLIP" steht dabei für "calling line identification presentation". Das Dienstmerkmal "CLIP" überträgt die Teilnehmeradresse bereits mit dem kostenfreien Verbindungsaufbau über den D-Kanal des EURO-ISDN-Kommunikationsnetzes zur Teilnehmerstation, bevor eine kostenpflichtige Verbindung über einen der B-Kanäle zustande kommt. Dadurch entstehen keine Übertragungskosten bei der Übertragung der Teilnehmeradresse und somit auch keine Kosten bei der erfindungsgemäßen Mitteilung über im zentralen Aufzeichnungsgerät gespeicherte Nachrichten.

Weitere Merkmale und Vorteile der Erfindung ergeben sich aus der folgenden Beschreibung, welche in Verbindung mit der beigefügten Zeichnung die Erfindung anhand eines Ausführungsbeispiels erläutert.

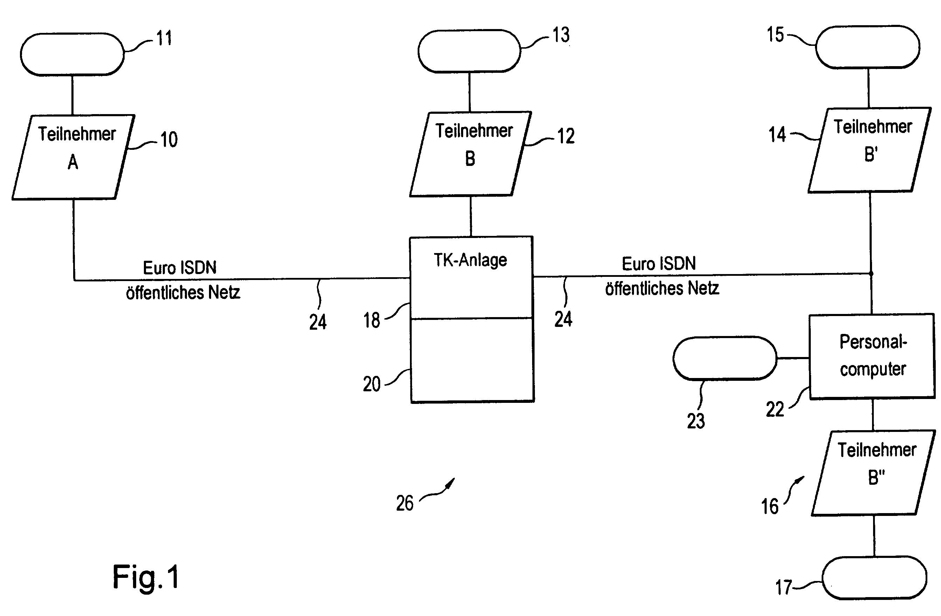

Die Figur 1 zeigt ein Kommunikationssystem 26 mit einem EURO-ISDN-Kommunikationsnetz 24, an dem mehrere Teilnehmer A, B, B', B'' mit Teilnehmerstationen 10, 12, 14, 16 und ein zentrales Aufzeichnungsgerät 20 angeschlossen sind. Ein Kommunikationssystem 26 ist in Verbindung mit einem EURO-ISDN-Kommunikationsnetz 24 dargestellt. An dem EURO-ISDN-Kommunikationsnetz 24 sind ein zentrales Aufzeichnungsgerät 20 und eine Teilnehmerstation 12 des Teilnehmers B über eine Telekommunikationsanlage 18 angeschlossen. Weiterhin sind die Teilnehmerstationen 10, 14, 16 der Teilnehmer A, B', B'' an das EURO-ISDN-Kommunikatonsnetz 24 direkt angeschlossen. Die Teilnehmerstation 16 des Teilnehmers B'' umfaßt einen Personalcomputer 22 mit Anzeigeeinheit 23 sowie ein an den Personalcomputer angeschlossenes Telefon 16 mit Anzeigeeinheit 17. Diese Teilnehmerstation 16 dient als Arbeitsplatz für einen "Teleworker".

Der rufende Teilnehmer A versucht, eine Verbindung über das EURO-ISDN-Telekommunikationsnetz 24 zu dem Teilnehmer B aufzubauen. Teilnehmer B ist an die Telekommunikationsanlage 18 mit zentralem Aufzeichnungsgerät 20 angeschlossen. Der Teilnehmer B hat das zentrale Aufzeichnungsgerät 20 so konfiguriert, daß es in seiner Abwesenheit Verbindungen zu rufenden Teilnehmern aufbaut und den rufenden Teilnehmern die Möglichkeit gibt, eine Nachricht für Teilnehmer B zu hinterlassen. Das zentrale Aufzeichnungsgerät 20 stellt die Verbindung zum rufenden Teilnehmer A her. Das zentrale Aufzeichnungsgerät 20 speichert die Nachricht von Teilnehmer A zum Abruf durch den Teilnehmer B.

In einer anderen Variante des Ausführungsbeispiels ist das zentrale Aufzeichnungsgerät 20 von dem Teilnehmer B so voreingestellt worden, daß es nach dem Speichern einer für Teilnehmer B bestimmten Nachricht eine Verbindung zu der Teilnehmerstation 16 des Teilnehmers B'' aufbaut. Bei dieser Verbindung wird die Teilnehmeradresse des zentralen Aufzeichnungsgerätes 20 über den D-Kanal des EURO-ISDN-Kommunikationsnetzes 24 unter Anwendung des EURO-ISDN-Dienstmerkmals "CLIP" (calling line identification presentation) übertragen. Dieses EURO-ISDN-Dienstmerkmal überträgt die Teilnehmeradresse bereits mit dem Verbindungsaufbau über den D-Kanal des EURO-ISDN-Kommunikationsnetzes 24 zur Teilnehmerstation 16, bevor eine kostenpflichtige Verbindung über einen der B-Kanäle zustande kommt. Im angeschlossenen Personalcomputer 22 wird die Teilnehmeradresse des zentralen Aufzeichnungsgerätes 20 empfangen. Diese Teilnehmeradresse wird mit einer im Personalcomputer 22 hinterlegten Teilnehmeradresse des zentralen Aufzeichnungsgerätes 20 verglichen. Ein Zähler (nicht dargestellt) im Personalcomputer 22 zählt die Verbindungen mit dem zentralen Aufzeichnungsgerät 20. Auf einer Anzeigeeinheit 23 des Personalcomputers 22 und/oder auf einer Anzeigeeinheit 17 des Telefons 16 erscheint der Zählwert als Text in Kombination mit einem kommentierenden Text, z.B. "03 neue Nachrichten", wobei "03" der Text des Zählwertes und "neue Nachrichten" der kommentierende Text ist. Dem Teilnehmer B'' wird dadurch mitgeteilt, daß drei neue Nachrichten im zentralen Aufzeichnungsgerät 20 gespeichert sind.

Speichert das zentrale Aufzeichnungsgerät 20 eine weitere Nachricht für den Teilnehmer B, baut es erneut eine Verbindung zu der Teilnehmerstation 16 des Teilnehmers B'' auf und überträgt seine Teilnehmeradresse über den D-Kanal des EURO-ISDN-Kommunikationsnetzes 24. Der Personalcomputer 22 überprüft jede empfangene Teilnehmeradresse durch einen Vergleich mit einer im Personalcomputer 22 hinterlegten Teilnehmeradresse des zentralen Aufzeichnungsgerätes 20. Stellt der Personalcomputer 22 fest, daß die empfangene Teilnehmeradresse mit der hinterlegten Teilnehmeradresse übereinstimmt, wird der Zählwert des Zählers um den Betrag eins erhöht. Damit ist die im zentralen Aufzeichnungsgerät 20 neu gespeicherte Nachricht vom Zähler des Personalcomputers 22 erfaßt worden. Auf der Anzeigeeinheit 23 des Personalcomputers 22 und/oder auf der Anzeigeeinheit 17 des Telefons 16 wird der neue Zählwert als Text ausgegeben. Bei vier im zentralen Aufzeichnungsgerät 20 gespeicherten Nachrichten hat das zentrale Aufzeichnungsgerät 20 vier Verbindungen zur Teilnehmerstation 16 hergestellt. Der Personalcomputer 22 hat diese Verbindungen erfaßt, so daß der Zählwert des Zählers vier beträgt und der Text "04 neue Nachrichten" durch die Anzeigeeinheiten 17, 23 angezeigt wird. Der kommentierende Text ist "neue Nachrichten", und "04" ist die Anzeige des Zählwertes als Text. Durch einen Benutzereingriff des Teilnehmers B'' und/oder automatisch beim Aufbau einer Verbindung von Teilnehmer B'' zum zentralen Aufzeichnungsgerät 20 wird der Wert des Zählers zurückgesetzt und der Text "00 neue Nachrichten" auf den Anzeigeeinheiten 17, 23 angezeigt.

Eine weitere Variante des Ausführungsbeispiels besteht darin, daß der Teilnehmer B das zentrale Aufzeichnungsgerät 20 so konfiguriert hat, daß es nach dem Speichern einer für den Teilnehmer B bestimmten Nachricht eine Verbindung zu der Teilnehmerstation 14 des Teilnehmers B' aufbaut. Durch diese Verbindung wird die Teilnehmeradresse des zentralen Aufzeichnungsgerätes 20 an die Teilnehmerstation 14 des Teilnehmers B' übertragen. Im angeschlossenen Telefon 14 wird das Überprüfen der empfangenen Teilnehmeradressen und das Zählen der durch die Prüfung ermittelten Teilnehmeradressen des zentralen Aufzeichnungsgerätes 20 in gleicher Weise durchgeführt, wie im oben beschriebenen Personalcomputer 22 der Teilnehmerstation 16. Auf der Anzeigeeinheit 15 der Teilnehmerstation 14 wird der Zählwert des Zählers als Text in Kombination mit einem kommentierenden Text angezeigt, z.B. "06 neue Nachrichten". Die Anzahl der gespeicherten Nachrichten, in diesem Beispiel sechs, werden dem Teilnehmer B' durch die Anzeige des Textes mitgeteilt. Der Zähler wird durch einen Benutzereingriff des Teilnehmers B' und/oder automatisch beim Aufbau einer Verbindung von Teilnehmer B' zum zentralen Aufzeichnungsgerät 20 zurückgesetzt. Es wird der Text "00 neue Nachrichten" auf der Anzeigeeinheit 15 der Teilnehmerstation 14 angezeigt.

Das zentrale Aufzeichnungsgerät 20 kann nach dem Speichern einer für den Teilnehmer B bestimmten Nachricht eine Verbindung zu einer beliebigen in dem zentralen Aufzeichnungsgerät 20 durch Teilnehmer B voreingestellten Teilnehmerstation im ISDN-Kommunikationsnetz 24 aufbauen. Das Auswerten und das Anzeigen der Teilnehmeradresse des zentralen Aufzeichnungsgerätes 20 in der jeweiligen Teilnehmerstation erfolgt analog der Auswertung und Funktion der oben beschriebenen Teilnehmerstation 14 des Teilnehmers B'.

Durch die Anzeige der Teilnehmeradresse des zentralen Aufzeichnungsgerätes 20 und/oder durch das Zählen der übertragenen Teilnehmeradressen des zentralen Aufzeichnungsgerätes 20 ist aus dem vorhandenen ISDN-Dienstmerkmal zum Übertragen der Teilnehmeradressen ein neues Dienstmerkmal generiert. Bei dem Gebrauch des neuen Dienstmerkmals fallen keine Verbindungskosten an.

## Patentansprüche

1. Telekommunikationssystem (26) mit einem ISDN-Kommunikationsnetz (24), über das mindestens ein erster (Teilnehmer A) und ein zweiter Teilnehmer (B) miteinander kommunizieren, mit einem zentralen Aufzeichnungsgerät (20), das an das ISDN-Kommunikationsnetz (24) angeschlossen ist,
wobei das zentrale Aufzeichnungsgerät (20) nach Aufzeichnung einer von einem rufenden ersten Teilnehmer (A) hinterlassenen Nachricht eine Verbindung zu einer durch den gerufenen zweiten Teilnehmer (B) festgelegten Teilnehmerstation (16) des ISDN-Kommunikationsnetzes (24) herstellt und die Teilnehmeradresse des zentralen Aufzeichnungsgerätes (20) durch ein im ISDN-Kommunikationsnetz (24) vorhandenes Dienstmerkmal, welches die Teilnehmeradresse des anrufenden Teilnehmers (20) übertragt, an die vom zweiten Teilnehmer (B) festgelegten Teilnehmerstation (16) überträgt, und
wobei die Teilnehmeradresse, die vom zentralen Aufzeichnungsgerät (20) an die Teilnehmerstation (16) übertragen wird, in der Teilnehmerstation (16) gespeichert und dem zweiten Teilnehmer (B) mitgeteilt wird.

2. Telekommunikationssystem (26) nach Anspruch 1, **dadurch gekennzeichnet**, daß
dem zweiten Teilnehmer (B) die Teilnehmeradresse des zentralen Aufzeichnungsgerätes (20) an der Teilnehmerstation (16) auf einer Anzeigeeinheit (17) angezeigt wird.

3. Telekommunikationssystem (26) nach einem der vorhergehenden Ansprüche, **dadurch gekennzeichnet**, daß
die Teilnehmeradresse in der Teilnehmerstation (16) aufbereitet wird, insbesondere durch Zuordnen eines Textes zur Teilnehmeradresse des zentralen Aufzeichnungsgerätes (20) und die Anzeige des Textes nach dem Empfang der Teilnehmeradresse an der Teilnehmerstation (16).

4. Telekommunikationssystem (26) nach einem der vorhergehenden Ansprüche, **dadurch gekennzeichnet**, daß
in der Teilnehmerstation (16) eine Zähleinrichtung angeordnet ist, die die Anzahl der eingegangenen Anrufe des zentralen Aufzeichnungsgerätes (20) zählt, und daß die Anzeigeeinheit (17) der Teilnehmerstation (16) den Zählwert der Zähleinrichtung anzeigt.

5. Telekommunikationssystem (26) nach einem der vorhergehenden Ansprüche, **dadurch gekennzeichnet**, daß
die Teilnehmerstation (16) ein Telefon, ein Telefaxgerät, einen Computer mit entsprechender Hard- und Software und/oder ein Telefon mit angeschlossenem Computer enthält.

6. Telekommunikationssystem (26) nach einem der vorhergehenden Ansprüche, **dadurch gekennzeichnet**, daß
mehrere Teilnehmer (B) das zentrale Aufzeichnungsgerät (20) nutzen, daß dieses zentrale Aufzeichnungsgerät (20) die eingehenden Nachrichten aufzeichnet und sie den gerufenen Teilnehmern (B) zuordnet, und daß bei Eingang einer Nachricht eine Teilnehmerstation (16) des gerufenen Teilnehmers (B) unter einer vereinbarten Teilnehmeradresse anruft, und daß bei Abruf der Nachricht jeder gerufene Teilnehmer (B) nur Zugriff auf die für ihn bestimmten Nachrichten hat.

7. Telekommunikationssystem (26) nach einem der vorhergehenden Ansprüche, **dadurch gekennzeichnet**, daß
die Teilnehmeradresse über den D-Kanal des EURO-ISDN-Kommunikationsnetzes (24) übertragen wird.

8. Telekommunikationssystem (26) nach einem der vorhergehenden Ansprüche, **dadurch gekennzeichnet**, daß
das zentrale Aufzeichnungsgerät (20) die Teilnehmeradresse an die Teilnehmerstation (16) unter Anwendung des ISDN-Dienstmerkmal "CLIP" überträgt.
